# EUROPEAN PATENT APPLICATION

(11) **EP 3 166 073 A1**
(43) Date of publication of application: **10.05.2017**
(21) Application number: 15306763.2
(22) Date of filing: 06.11.2015
(51) Int. Cl.: G06T 5/50

(54) **METHOD FOR OBTAINING A REFOCUSED IMAGE FROM 4D RAW LIGHT FIELD DATA**

(71) Applicant: Thomson Licensing, 92130 Issy-les-Moulineaux (FR)
(72) Inventor: SABATER, Neus, 35576 CESSON SEVIGNE (FR); VANDAME, Benoit, 35576 CESSON SEVIGNE (FR); HOG, Matthieu, 35576 CESSON SEVIGNE (FR); DRAZIC, Valter, 35576 CESSON SEVIGNE (FR)
(74) Representative: Huchet, Anne

(57) **Abstract**

In one embodiment of the disclosure, it is proposed a method for obtaining a refocused image from 4D raw light field data for a given focus plane value *g*. The method is executed by an electronic device, and is remarkable in that it comprises determining at least one pixel value of said refocused image at coordinates 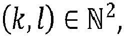 said determining comprising:
- obtaining a list of pixel coordinates comprised in said 4D raw light field data, each of said pixel coordinates being comprised in a micro-lens image associated with a micro- lens, each of said pixel coordinates belonging to a different micro-lens image, and each of said pixel coordinates being determined as a function of a depth map and a center of the micro-lens image it belongs to;
- weighting and summing pixels values comprised in said 4D raw light field data, said pixel values being obtained based on said list of pixel coordinates.

## Description

### Technical Field

The disclosure relates to 4D light field data processing. More precisely, the disclosure relates to a technique for obtaining a 2D refocused image directly from 4D raw light field data, without performing a demultiplexing of 4D raw light field data (i.e. obtaining a refocused image without using sub-aperture images derived/obtained from 4D raw light field data).

### Background

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

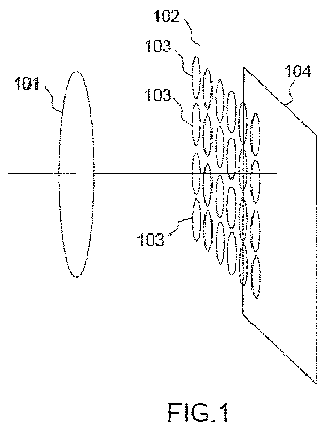

The acquisition of 4D light-field data), which can be viewed as a sampling of a 4D light field (i.e. the recording of light rays as explained in Figure 1 of the article:" Understanding camera trade-offs through a Bayesian analysis of light field projections" by Anat Levin et al., published in the conference proceedings of ECCV 2008) is an hectic research subject.

Indeed, compared to classical 2D images obtained from a camera, 4D light-field data enable a user to have access to more post processing features that enhance the rendering of images and/or the interactivity with the user. For example, with 4D light-field data, it is possible to perform with ease refocusing of images a posteriori (i.e. refocusing with freely selected distances of focalization meaning that the position of a focal plane can be specified/selected a posteriori), as well as changing slightly the point of view in the scene of an image. In order to acquire 4D light-field data, several techniques can be used. Especially, a plenoptic camera, as depicted in document WO 2013/180192 or in document GB 2488905**,** is able to acquire 4D light-field data. Details of the architecture of a plenoptic camera are provided in Figures 1, 2, 3, 4 and 5 of the present document.

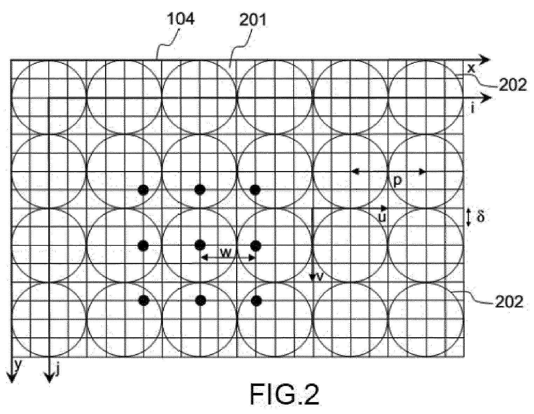

In the state of the art, there are several ways to represent (or define) 4D light-field data. Indeed, in the Chapter 3.3 of the Phd dissertation thesis entitled "Digital Light Field Photography" by Ren Ng, published in July 2006, three different ways to represent 4D light-field data are described. Firstly, 4D light-field data can be represented, when recorded by a plenoptic camera as the one depicted in Figure 1 for example, by a collection of micro-lens images (see the description of Figure 2 in the present document). 4D light-field data in this representation are named raw images (or 4D raw light-field data). Secondly, 4D light-field data can be represented, by a set of sub-aperture images. A sub-aperture image corresponds to a captured image of a scene from a point of view, the point of view being slightly different between two sub-aperture images. These sub-aperture images give information about the parallax and depth of the imaged scene. Thirdly, 4D light-field data can be represented by a set of epipolar images (see for example the article entitled : "Generating EPI Representation of a 4D Light Fields with a Single Lens Focused Plenoptic Camera", by S. Wanner et al., published in the conference proceedings of ISVC 2011).

A common technique that is used to perform refocusing from 4D light-field data is based on the shift and addition of micro-lens images (i.e. directly from the 4D raw light-field data, note *I_{RAW})* as explained in document WO 2013/167758 (in the section "image refocusing method"). The Figure 6 of the present document roughly depicts how to project a pixel at coordinates (*x*,*y*) in said 4D raw light-field data for obtaining a 2D image. While 4D raw light-field pixels (i.e. the pixels of the micro-images) are projected into a refocused image, a weight-map records the number of accumulated projected pixels. The weight-map also records the interpolation in the case that projected coordinates are non-integer coordinates. Once all 4D raw light-field pixels are projected into the refocused image and the weight-map is determined, the refocused image is divided by the weight-map so that each refocused pixel received the same average contribution. The resulting 2D image can be output on a display, or stored and/or transmitted to another device for example.

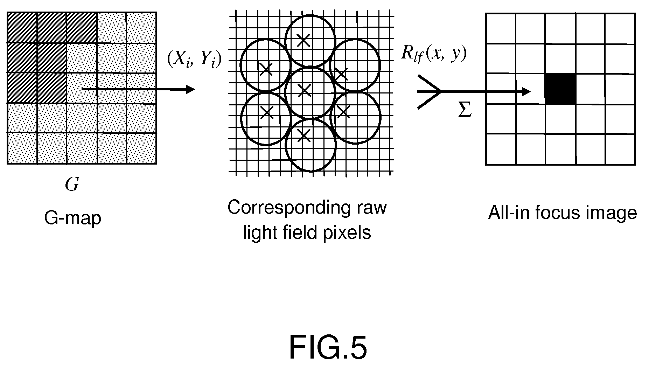

In order to improve the quality (especially the sharpness) of the 2D refocused image, the technique described in the article entitled "Refocusing Plenoptic Images using Depth-Adaptive Splatting" by Juliet Fiss et al. can be used for interpolation purpose. Indeed, the interpolation based on this approach consists in spreading the influence of a 4D raw light-field pixel on the 2D refocused image (see the Figure 5 of the article where a 4D raw light-field pixel at coordinates (*x*,*y*) is projected to a location *s* with a value defined as a function of a splat kernel). As mentioned in this article: "*Splatting can be viewed as a form of scattered data interpolation using radial basis functions*"*.* However, the splatting approach has some limitations. Indeed, the splatting technique does not allows to perform an all-in-focus image rendering or an artistic focus rendering (with two or more different focal planes).

Therefore, there is a need to provide a technique that can overcome at least such drawback.

### Summary of the disclosure

References in the specification to "one embodiment", "an embodiment", "an example embodiment", indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

The present disclosure is directed to method for obtaining a refocused image from 4D raw light field data for a given focus plane value *g*. Such method is executed by an electronic device, and is remarkable in that it comprises determining at least one pixel value of said refocused image at coordinates $\left(k, l\right) ∈ {N}^{2} ,$ said determining comprising:
- obtaining a list of pixel coordinates comprised in said 4D raw light field data, each of said pixel coordinates being comprised in a micro-lens image associated with a micro- lens, each of said pixel coordinates belonging to a different micro-lens image, and each of said pixel coordinates being determined as a function of a depth map and a center of the micro-lens image it belongs to;
- weighting and summing pixels values comprised in said 4D raw light field data, said pixel values being obtained based on said list of pixel coordinates.

In another embodiment of the disclosure, the method for obtaining is remarkable in that a pixel coordinate (*xᵢ*,*yᵢ*), comprised in said list, is defined as a function of $( \frac{\frac{k}{s} - {c}_{{xμlens}_{i}}}{G \left(k, l\right)} +$ ${c}_{x {μlens}_{i}} , \frac{\frac{l}{s} - {c}_{y {μlens}_{i}}}{G \left(k, l\right)} + {c}_{y {μlens}_{i}} ) ,$ where *s* is a ratio size between the 4D raw light field data and the refocused image, (c*_{xᵢµlens}, c*_{*yᵢ*µlens}) correspond to the micro-lens image center coordinates associated with the micro-lens *i,* and the function *G*(*X,Y*)*,* being said depth map, is equal to the focus value *g* when the pixel having coordinates (*X,Y*) is in focus in said refocused image.

In one embodiment of the disclosure, the function *G(X,Y)* is stored on an electronic device as a lookup table.

In another embodiment of the disclosure, the method for obtaining is remarkable in that $\left({x}_{i}, {y}_{i}\right) = \left(floor\left(\frac{\frac{k}{s} - {c}_{{xμlens}_{i}}}{G \left(k, l\right)}+{c}_{{xμlens}_{i}}\right),floor\left(\frac{\frac{l}{s} - {c}_{y {μlens}_{i}}}{G \left(k, l\right)}+{c}_{y {μlens}_{i}}\right)\right) ,$ where floor (.) is the floor function or the greatest integer function.

In another embodiment of the disclosure, the method for obtaining is remarkable in that $\left({x}_{i}, {y}_{i}\right) = \left(ceil\left(\frac{\frac{k}{s} - {c}_{{xμlens}_{i}}}{G \left(k, l\right)}+{c}_{{xμlens}_{i}}\right),ceil\left(\frac{\frac{l}{s} - {c}_{y {μlens}_{i}}}{G \left(k, l\right)}+{c}_{y {μlens}_{i}}\right)\right) ,$ where ceil (.) is the ceiling function.

In another embodiment of the disclosure, the method for obtaining is remarkable in that $\left({x}_{i}, {y}_{i}\right) = \left(ceil\left(\frac{\frac{k}{s} - {c}_{{xμlens}_{i}}}{G \left(k, l\right)}+{c}_{{xμlens}_{i}}\right),floor\left(\frac{\frac{l}{s} - {c}_{y {μlens}_{i}}}{G \left(k, l\right)}+{c}_{y {μlens}_{i}}\right)\right) ,$ where ceil (.) is the ceiling function and floor (.) is the floor function or the greatest integer function.

In another embodiment of the disclosure, the method for obtaining is remarkable in that $\left({x}_{i}, {y}_{i}\right) = \left(floor\left(\frac{\frac{k}{s} - {c}_{{xμlens}_{i}}}{G \left(k, l\right)}+{c}_{{xμlens}_{i}}\right),ceil\left(\frac{\frac{l}{s} - {c}_{y {μlens}_{i}}}{G \left(k, l\right)}+{c}_{y {μlens}_{i}}\right)\right) ,$ where ceil (.) is the ceiling function, and floor (.) is the floor function or the greatest integer function.

In another embodiment of the disclosure, the method for obtaining is remarkable in that said obtaining a list of pixel coordinates further comprises discarding at least one pixel coordinates according to a micro-lens image belonging distance criteria.

In another embodiment of the disclosure, the method for obtaining is remarkable in that said discarding of said at least one pixel coordinates occurs when an Euclidian distance between position of said at least one pixel coordinates, and position of the center of micro-lens images being processed is larger than the radius of said micro-lens images being processed.

In another embodiment of the disclosure, the method for obtaining is remarkable in that said obtaining a list of pixel coordinates further comprises obtaining a list of micro-lens images, each of said micro-lens images being virtually intersected by a circle of center coordinates $( k /$ $s , l / s ) ∈ {N}^{2} ,$ where *s* is a ratio size between the 4D raw light field data and the refocused image, and of radius *n*, said list of micro-lens images being used to determine said list of pixel coordinates.

In another embodiment of the disclosure, the method for obtaining is remarkable in that said weighting and summing pixels values further comprises determining for each pixel coordinates of said list, a set of neighboring pixel coordinates belonging to the same micro-lens image than the processed pixel coordinate, the union of these sets defining pixels coordinates whom values have to be weighted and then summed.

In another embodiment of the disclosure, the method for obtaining is remarkable in that said neighboring is related to the belonging of a circle centered on a pixel coordinate of said list, and with a radius equal to R.

In another embodiment of the disclosure, the method for obtaining is remarkable in that the radius R is defined as a function of the given focus plane value *g* and the focal length of the micro-lens associated with the micro-lens image where the pixel coordinate of said list belongs to.

In another embodiment of the disclosure, the method for obtaining is remarkable in that the value of the radius R is defined based on a depth map and the given focus plane value *g*.

In another embodiment of the disclosure, the method for obtaining is remarkable in that said weighting comprises decreasing the contribution of pixels values as a function of a distance between coordinates of said pixels values and said list of pixel coordinates.

According to an exemplary implementation, the different steps of the method are implemented by a computer software program or programs, this software program comprising software instructions designed to be executed by a data processor of a relay module according to the disclosure and being designed to control the execution of the different steps of this method.

Consequently, an aspect of the disclosure also concerns a program liable to be executed by a computer or by a data processor, this program comprising instructions to command the execution of the steps of a method as mentioned here above.

This program can use any programming language whatsoever and be in the form of a source code, object code or code that is intermediate between source code and object code, such as in a partially compiled form or in any other desirable form.

The disclosure also concerns an information medium readable by a data processor and comprising instructions of a program as mentioned here above.

The information medium can be any entity or device capable of storing the program. For example, the medium can comprise a storage means such as a ROM (which stands for *"Read Only Memory*")*,* for example a CD-ROM (which stands for *"Compact Disc - Read Only Memory"*) or a microelectronic circuit ROM or again a magnetic recording means, for example a floppy disk or a hard disk drive.

Furthermore, the information medium may be a transmissible carrier such as an electrical or optical signal that can be conveyed through an electrical or optical cable, by radio or by other means. The program can be especially downloaded into an Internet-type network.

Alternately, the information medium can be an integrated circuit into which the program is incorporated, the circuit being adapted to executing or being used in the execution of the method in question.

According to one embodiment, an embodiment of the disclosure is implemented by means of software and/or hardware components. From this viewpoint, the term "module" can correspond in this document both to a software component and to a hardware component or to a set of hardware and software components.

A software component corresponds to one or more computer programs, one or more sub-programs of a program, or more generally to any element of a program or a software program capable of implementing a function or a set of functions according to what is described here below for the module concerned. One such software component is executed by a data processor of a physical entity (terminal, server, etc.) and is capable of accessing the hardware resources of this physical entity (memories, recording media, communications buses, input/output electronic boards, user interfaces, etc.).

Similarly, a hardware component corresponds to any element of a hardware unit capable of implementing a function or a set of functions according to what is described here below for the module concerned. It may be a programmable hardware component or a component with an integrated circuit for the execution of software, for example an integrated circuit, a smart card, a memory card, an electronic board for executing firmware etc. In a variant, the hardware component comprises a processor that is an integrated circuit such as a central processing unit, and/or a microprocessor, and/or an Application-specific integrated circuit (ASIC), and/or an Application-specific instruction-set processor (ASIP), and/or a graphics processing unit (GPU), and/or a physics processing unit (PPU), and/or a digital signal processor (DSP), and/or an image processor, and/or a coprocessor, and/or a floating-point unit, and/or a network processor, and/or an audio processor, and/or a multi-core processor. Moreover, the hardware component can also comprise a baseband processor (comprising for example memory units, and a firmware) and/or radio electronic circuits (that can comprise antennas) which receive or transmit radio signals. In one embodiment, the hardware component is compliant with one or more standards such as ISO/IEC 18092 / ECMA-340, ISO/IEC 21481 / ECMA-352, GSMA, StoLPaN, ETSI / SCP (Smart Card Platform), GlobalPlatform (i.e. a secure element). In a variant, the hardware component is a Radio-frequency identification (RFID) tag. In one embodiment, a hardware component comprises circuits that enable Bluetooth communications, and/or Wi-fi communications, and/or Zigbee communications, and/or USB communications and/or Firewire communications and/or NFC (for Near Field) communications.

It should also be noted that a step of obtaining an element/value in the present document can be viewed either as a step of reading such element/value in a memory unit of an electronic device or a step of receiving such element/value from another electronic device via communication means.

In another embodiment, it is proposed an electronic device for obtaining a refocused image from 4D raw light field data for a given focus plane value *g*. Such electronic device comprises a module configured to determine at least one pixel value of said refocused image at coordinates $\left(k, l\right) ∈ {N}^{2} ,$ comprising:
- a module configured to obtain a list of pixel coordinates comprised in said 4D raw light field data, each of said pixel coordinates being comprised in a micro-lens image associated with a micro- lens, each of said pixel coordinates belonging to a different micro-lens image, and each of said pixel coordinates being determined as a function of a depth map and a center of the micro-lens image it belongs to;
- a module configured to weight and sum pixels values comprised in said 4D raw light field data, said pixel values being obtained based on said list of pixel coordinates.

### Brief description of the drawings

The above and other aspects of the invention will become more apparent by the following detailed description of exemplary embodiments thereof with reference to the attached drawings in which:
- Figure 1 present schematically the main components comprised in a plenoptic camera that enables the acquisition of light field data on which the present technique can be applied;
- Figure 2 present an image captured by a sensor array of Figure 1;
- Figure 3 presents the obtaining of a list of pixel coordinates comprised in 4D raw light field data, for a given pixel coordinate in a refocused image, according to an embodiment of the disclosure;
- Figure 4 presents the obtaining of pixels coordinates from a list of pixel coordinates comprised in 4D raw light field data, for a given pixel coordinate in a refocused image, according to an embodiment of the disclosure;
- Figure 5 presents the determining of the value of a given pixel in a refocused image (all in focus image) according to an embodiment of the disclosure;
- Figure 6 presents the determining of the value of a given pixel in a refocused image according to another embodiment of the disclosure;
- Figure 7 presents a flow diagram of a method for obtaining a refocused image according to an embodiment of the disclosure; and
- Figure 8 presents an example of device that can be used to perform one or several steps of methods disclosed in the present document.

### Detailed description

Figure 1 present schematically the main components comprised in a plenoptic camera that enables the acquisition of light field data on which the present technique can be applied.

More precisely, a plenoptic camera comprises a main lens referenced 101, and a sensor array (i.e. an array of pixel sensors (for example a sensor based on CMOS technology)), referenced 104. Between the main lens 101 and the sensor array 104, a micro-lens array referenced 102, that comprises a set of micro-lenses referenced 103, is positioned. It should be noted that optionally some spacers might be located between the micro-lens array around each lens and the sensor to prevent light from one lens to overlap with the light of other lenses at the sensor side. In one embodiment, all the micro-lenses have the same focal. In another embodiment, the micro-lens can be classified into at least three groups of micro-lenses, each group being associated with a given focal, different for each group. Moreover, in a variant, the focal of a micro-lens is different from the ones positioned at its neighborhood; such configuration enables the enhancing of the plenoptic camera's depth of field. It should be noted that the main lens 101 can be a more complex optical system as the one depicted in Figure 1 (as for example the optical system described in Figures 12 and 13 of document GB2488905) Hence, a plenoptic camera can be viewed as a conventional camera plus a micro-lens array set just in front of the sensor as illustrated in Figure 1. The light rays passing through a micro-lens cover a part of the sensor array that records the radiance of these light rays. The recording by this part of the sensor defines a micro-lens image.

Figure 2 present an image captured by the sensor array 104. Indeed, in such view, it appears that the sensor array 104 comprises a set of pixels, referenced 201. The light rays passing through a micro-lens cover a number of pixels 201, and these pixels record the energy value of light rays that are incident/received.

Hence the sensor array 104 of a plenoptic camera records an image which comprises a collection of 2D small images (i.e. the micro-lens images referenced 202) arranged within a 2D image (which is also named a raw 4D light-field image). Indeed, each small image (i.e. the micro-lens images) is produced by a micro-lens (the micro-lens can be identified by coordinates (i,j) from the array of lens). Hence, the pixels of the light-field are associated with 4 coordinates (x,y,i,j). *L*(*x,y,i,j*) being the 4D light-field recorded by the sensor illustrates the image which is recorded by the sensor. Each micro-lens produces a micro-image represented by a circle (the shape of the small image depends on the shape of the micro-lenses which is typically circular). Pixel coordinates (in the sensor array) are labelled (x,y). *p* is the distance between two consecutive micro-images, p is not necessary an integer value. Micro-lenses are chosen such that *p* is larger than a pixel size δ. Micro-lens images are referenced by their coordinates (i, j). Each micro-lens image samples the pupil of the main-lens with the (u,v) coordinate system. Some pixels might not receive any photons from any micro-lens especially if the shape of the micro-lenses is circular. In this case, the inter micro-lens space is masked out to prevent photons to pass outside from a micro-lens, resulting in some dark areas in the micro-images. If the micro-lenses have a square shape, no masking is needed). The center of a micro-lens image (i,j) is located on the sensor at the coordinates (x_{i,j},y_{i,j}). θ is the angle between the square lattice of pixel and the square lattice of micro-lenses, in Figure 2 θ = 0. Assuming the micro-lenses are arranged according to a regular square lattice, the (x_{i,j}, y_{i,j}) can be computed by the following equation considering (x_{0,0}, y_{0,0}) the pixel coordinates of the micro-lens image (0,0): $\left[\begin{matrix}{x}_{i , j} \\ {y}_{i , j}\end{matrix}\right] = p \left[\begin{matrix}cosθ & - sinθ \\ sinθ & cosθ\end{matrix}\right] \left[\begin{matrix}i \\ j\end{matrix}\right] + \left[\begin{matrix}{x}_{0 , 0} \\ {y}_{0 , 0}\end{matrix}\right]$

Figure 2 also illustrates that an object from the scene is visible on several contiguous micro-lens images (dark dots). The distance between 2 consecutive views of an object is w, this distance is named the replication distance. Hence, an object is visible on r consecutive micro-lens images with: $r = ⌊ \frac{p}{\left|p-w\right|} ⌋$

r is the number of consecutive micro-lens images in one dimension. An object is visible in *r*² micro-lens images. Depending on the shape of the micro-lens image, some of the *r*² views of the object might be invisible.

More details related to plenoptic camera can be found out in the Section 4 entitled *"Image formation of a Light field camera"* in the article entitled *"*The Light Field Camera: Extended Depth of Field, Aliasing, and Superresolution" by Tom E. Bishop and Paolo Favaro, published in the IEEE Transactions on Pattern Analysis and Machine Intelligence, Vol. 34, N°5, in May 2012.

It should be noted that the present technique can also be applied on "conventional camera" (in the sense that no additional micro-lens array is positioned between the main lens and array of pixels), in the case that at least a part of the pixels of such conventional camera are designed in the same way (or similar way) as the one described in the document US2013258098**.** Indeed, document US2013258098 discloses a pixel that can record light field data due to the use of several light receiving sections (for example referenced 116 and 117 in document US2013258098). Hence, one skilled in the art could assimilate such conventional camera with an array of pixels integrating the technique of document US2013258098 as a kind of plenoptic camera as depicted in Figure 1, in which each micro-lens concentrates light rays on two pixels comprised in the sensor 104. It should be noted that technique of document US2013258098 can be generalized in the sense that a pixel can record more than two data information (obtained by the two low and high receiving sections), if more receiving section are integrated in the architecture of a pixel. The present disclosure can be used on raw images of "conventional camera" integrating pixels that can record light field data as mentioned previously. Indeed, these raw images can be assimilated to a set of micro-lens images.

It should also be noted that the present disclosure can also be applied to other devices that acquire 4D light field data such as devices that comprise coded aperture elements as depicted in document US 2010/0265386, or in the article entitled *"*Image and depth from a conventional camera with a coded aperture" by A. Levin a al., published in the proceedings of SIGGRAPH 2007, or use wavefront coding techniques as mentioned in the article entitled "Extended depth of field through wave-front coding" by Edward R. Dowski, Jr., and W. Thomas Cathe, published in Applied Optics, 1995 Apr 10.

The proposed technique relates to a method for obtaining a refocused image from a 4D raw light field data for a given focus (based on the value of *g*) that comprises determining a value of a pixel in the refocused image at the position *(k, l)* ∈ *N*². In order to achieve this goal, an electronic module obtains a list of pixel coordinates comprised in 4D raw light field data. Contrary to the classical approach of projecting pixels from 4D raw light field data for determining pixels values of a refocused image as explained in document WO 2013/167758**,** the present technique uses an inverse approach. Indeed, by using a coordinate/position of a pixel in the refocused image, in order to determine the value of such pixel, an electronic device obtains first of all a list of coordinates pixels in the 4D raw light field data, by using the inverse equation of the projection equation (the projection equation is described for example in document WO 2013/167758 at page 7).

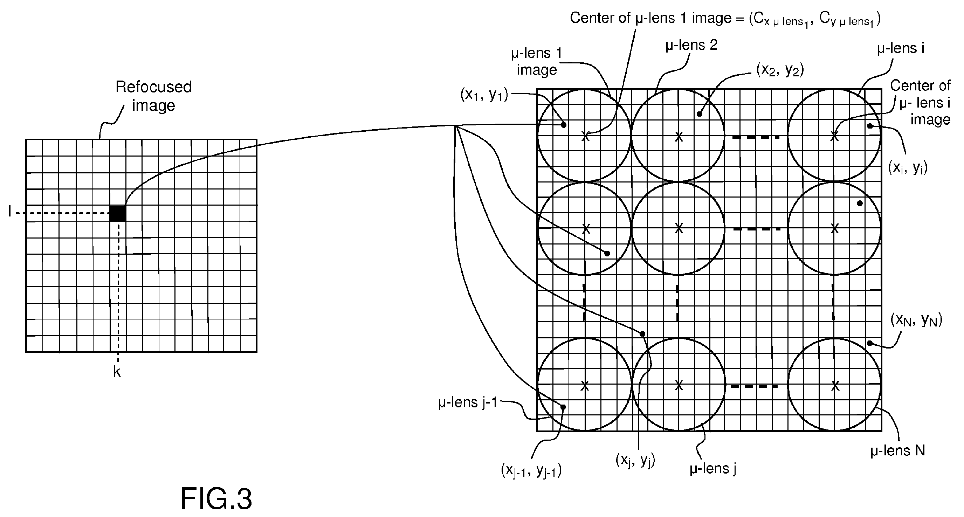

The Figure 3 presents the obtaining of a list of pixel coordinates comprised in 4D raw light field data, for a given pixel coordinate in a refocused image, according to an embodiment of the disclosure.

More precisely, for a pixel in the refocused image at the position or coordinates $\left(k, l\right) ∈$ ${N}^{2} ,$ an electronic module determines, for each micro-lens image *t* (with1 ≤ *t ≤ N,* where *N* is the total number of micro-lens in a plenoptic camera) having a center at coordinates (*C_{xµlensₜ},* C*_{yµlensₜ}*), at least one pixel at coordinates (*xₜ*,*yₜ*) by using the inverse equation of the projection. It should be noted that we assume that micro-lens images centers (*C_{xµlensₜ}, C_{yµlensₜ}*) are estimated by any technique of the state-of-the-art (as the one described in the article entitled *"*Decoding, calibration and rectification for lenselet-based plenoptic cameras" by Dansereau et al., published in the conference proceedings of Computer Vision and Pattern Recognition (CVPR), 2013 IEEE Conference on. IEEE).

Hence, for the first micro-lens image, having a center at coordinates *C*_{*µlens*₁} *=* (c_{*xµlens*₁}, c_{*y*µ*lens*₁}), the following coordinates are determined: $\left({x}_{1}, {y}_{1}\right) = \left(\frac{\frac{k}{s} - {c}_{{xμlens}_{1}}}{G \left(k, l\right)}+{c}_{{xμlens}_{1}},\frac{\frac{l}{s} - {c}_{{yμlens}_{1}}}{G \left(k, l\right)}+{c}_{{yμlens}_{1}}\right)$

Where the function *G(X,Y)* is the focus value *g* for wich a pixel at coordinates *X,Y* in the refocused image is in focus. The so-called *G* -map/function is computed from a depth estimation step prior to the rendering (known by state of the art). For example, in one embodiment of the disclosure, the *G* -map/function is computed is determined by applying the technique described in the article entitled: *"*Single lens 3d-camera with extended depth-of-field" by C. Perwass and L. Wietzke, published in the Proceedings of the SPIE Conference in 2012, volume 8291, and page 829108.

For the second micro-lens image, having a center at coordinates *C*_{*µlens*₂} = (*c_{xµlens₂}, c_{yµlens₂}*)*,* the following coordinates are determined: $\left({x}_{2}, {y}_{2}\right) = \left(\frac{\frac{k}{s} - {c}_{{xμlens}_{2}}}{G \left(k, l\right)}+{c}_{{xμlens}_{2}},\frac{\frac{l}{s} - {c}_{{yμlens}_{2}}}{G \left(k, l\right)}+{c}_{{yμlens}_{2}}\right)$

The same computation is performed for each micro-lens images. It should be noted that such computation can be performed sequentially or in parallel.

Therefore, the list of coordinates of pixels corresponds to the following set {(*x*₁,*y*₁), (*x*₂,*y*₂), ...} comprising a number of coordinates equals to the number of micro-lens images. In one embodiment of the disclosure the ceil and/or the floor functions can be used for determining integers that enable the localization of the pixels in the 4D raw light field data.

In one embodiment of the disclosure, the electronic device can discard at least one of the pixel at coordinates (*xₜ,yₜ*) in the case that the Euclidian distance between the pixel coordinates (*xₜ,yₜ*) and the corresponding micro-lens center at coordinates (*C_{xµlensₜ}*,C*_{yµlensₜ}*) is greater than the radius of the micro-lens image. For example such case occurs in Figure 3 for the pixel coordinates (*xⱼ,yⱼ*) and the pixel coordinates (*x_{N},y_{N}*). This is due to the fact that, an object in a scene can be only seen by a limited number of micro-lens images. Hence, pixels with coordinates (*xₜ,yₜ*) that fulfills the requirements: $\sqrt{{\left({x}_{t}-{C}_{{xμlens}_{t}}\right)}^{2} + {\left({y}_{t}-{C}_{{yμlens}_{t}}\right)}^{2}} < \frac{D}{2} ,$ where *D* is the diameter of the micro-lens image *t* (D being expressed in number of pixels for example).

This test should be carried out across all the micro-lens centers, making the overall solution computationally expensive.

However, as explained previously, usually an object is visible in *r*² micro-lens images. Therefore, it is not necessary for a given position or coordinates(*k*, *l*) in the refocused image to perform this computation for all the micro-lens image.

Moreover, based on the fact that a pixel (*k, l)* in the refocused image can only receive contribution from rays around (*k*, *l*)/*s* in the 4D raw light field data, then one can determine the coordinates in the list only with a subset of the micro-lens images centers. More precisely, the micro-lens that are selected should intersect virtually with a circle centered on coordinates (*k,l*)/s in the 4D raw light field data and having a diameter size of $D . \sqrt{\frac{p}{\left|p-w\right|}} .$ In another embodiment, it is not necessary to explicitly determine the value of $D \times \sqrt{\frac{p}{\left|p-w\right|}} .$ One can choose either a fixed value or a random value that is large enough for selecting the micro-lens images to be used for obtaining the list of pixels coordinates (for example the random value must be greater than 6.*D* and smaller than 15.D; indeed, in the case that a random value is generated a test should occur for preventing the use of small values or too big values). Therefore, in one embodiment of the disclosure, an electronic device selects pixel coordinates *(k, l)* in the refocused image. Then, it determines the pixel coordinates (*k*, *l*)/s in the 4D raw light field. The electronics device determines the subset of micro-lens images that have at least one pixel coordinate (*x*,*y*) that belongs to a circle of center $\left(\frac{k}{s}, \frac{l}{s}\right)$ and of radius *n* such that: $\sqrt{{\left(x-k/s\right)}^{2} + {\left(y-l/s\right)}^{2}} < n$

where *n* defines the maximal neighbor search possible (i.e. in one embodiment, such *n* corresponds to the previously mentioned fixed value or the previously mentioned random value. It should be noted that in one embodiment, *n* could be derived empirically from *G(X,Y).* However, using a large and fixed *n* is simpler and rather effective. Then from the previous computation, the electronic device obtains a list of micro-lens images, comprising *n*₁ elements (referenced*t*₁, ..., *t*_{n₁}). For each of these micro-lens images, the electronic device determines the pixel coordinates of *(x*_{*t*₁}), ...,(*xt*_{*n*₁},y_{*tn*₁}) via the use of the previous mentioned equation.

In another embodiment of the disclosure, instead of a circle centered to the coordinate point $\left(\frac{k}{s}, \frac{l}{s}\right)$ and of radius *n*, another geometrical structure that comprises such coordinate point $\left(\frac{k}{s}, \frac{l}{s}\right)$ and covering an area/surface large enough (for example not much far from π*n*²) could be used. In one embodiment, the geometrical structure is a regular hexagon having for center the coordinate point $\left(\frac{k}{s}, \frac{l}{s}\right) .$

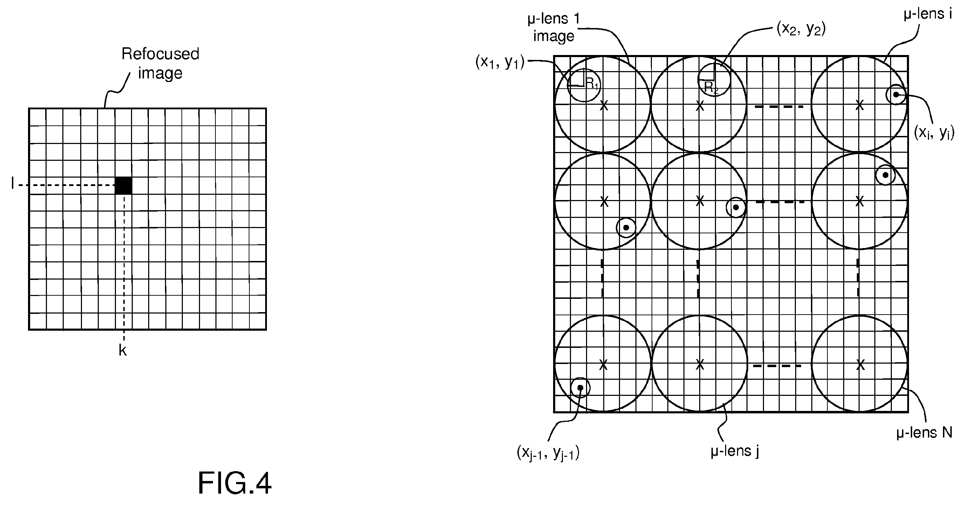

Figure 4 presents the obtaining of pixels coordinates from a list of pixel coordinates comprised in 4D raw light field data, for a given pixel coordinate in a refocused image, according to an embodiment of the disclosure.

In such embodiment of the disclosure, once a list of pixel coordinates has been obtained as explained in the description of Figure 3, a set of pixels to weight and sum for determining the value of the pixel at coordinates *(k, l)* in the refocused image has to be obtained. Instead of using only the pixels from the obtained list as explained in Figure 3, more pixels can be used by taken for each pixel from the list, the pixels "belonging" to a circle centered on the pixels from the list, and having a radius *Rₜ.* For example, in the Figure 4, a circle having for center the point at coordinates (*x*₁,*y*₁) and a radius equal to *R*₁ is used to determine/select pixels to be used for the determination of the value of the refocused pixel at coordinates *(k, l)* in the refocused image. Once such circle intersects a pixel in the 4D raw light field data, the selection occurs.

It should be noted that in one embodiment of the disclosure, all the radius *Rₜ* have the same values.

In another embodiment of the disclosure, the radius *R*ₜ have values that are linked to the value of the focal of the micro-lens *t* that delivers the micro-lens image *t.* The closer to *g* the focal is, the smaller the radius is.

Figure 5 presents the determining of the value of a given pixel in a refocused image (all in focus image) according to an embodiment of the disclosure.

The pixel intensity value of *(k, l)* is obtained by the use of a weighted average of the selected pixels. The weighting can be performed using several solutions. A simple nearest neighbor weighting will give a rendering equation: $I \left(k, l\right) = \frac{1}{C \left(k, l\right)} {\sum }_{\left(x, y\right) , t} \left({{K}^{\left(t\right)}}_{x , y}\times {I}_{raw}\left(floor\left(x\right),floor\left(y\right)\right)\right)$ with ${{K}^{\left(t\right)}}_{x , y} = exp \left[-\frac{{\left(( \left\{x\right\} - {c}_{{xμlens}_{t}}\right)}^{2} + {\left(\left\{y\right\}{c}_{{yμlens}_{t}}\right)}^{2}}{σ}\right]$ and $C \left(k, l\right) = {\sum }_{\left(x, y\right) , t} {K}^{\left(t\right)} x , y$

where *I* is the refocused image, I_{raw} the raw light field image, (*x*,*y*) the values of the coordinates of the **selected** pixels the 4D raw light field data (as explained in Figure 4 or Figure 3; in one embodiment only selected pixels (*xₜ*,*yₜ*) are used, and in another embodiment, some pixels around the selected pixels (*xₜ*,*yₜ*) of some micro-lens images are used). *K*^{(*t*)}*_{x,y}* denotes the weight computed as the distance of the pixel coordinate (*x*,*y*) from the pixel center of the micro-lens image *t, C* denotes the sum of contribution weight and is used to normalize the summed pixel intensity, and σ is a normalization coefficient. Moreover, the notation {*a*} corresponds to the fractional part (i.e. the sawtooth function) of the value *a*.

In another embodiment of the disclosure, the weight function *K*^{(*t*)}*_{x,y}* is the same for all the selected micro-lens *t*. For example, we can use the following weight function: ${{K}^{\left(t\right)}}_{x , y} = {K}_{x , y} = \left\{\sqrt{0.5}-\sqrt{{\left(\left\{x\right\}\right)}^{2} + {\left(\left\{y\right\}\right)}^{2}}\right\}$

In the case of multi-focus plenoptic cameras (e.g. Raytrix has micro-lenses with 3 different focal lengths), the weight K can also be used to penalize during the average the pixels values coming from the micro-lenses with larger focal difference with respect to the desired focal length *g* (i. e. the refocusing value at which the user aims to render the image). Formally, we could rewrite the definition of the weighting as: ${{K}^{\left(t\right)}}_{x , y} = exp \left[\frac{{\left(( \left\{x\right\} - {c}_{{xμlens}_{t}}\right)}^{2} + {( \left\{y\right\} - {c}_{{yμlens}_{t}} )}^{2} \times α {\left(g-F\right)}^{2}}{σ}\right]$
where F is the corresponding focal length of the micro-lens with center(*c*_{x*µlensₜ*}, c*_{yµlensₜ}*). In this equation, the second term in the exponential gives a larger weight to pixel values coming from micro-lenses with focal lengths that are close to the desired value *g*.

The proposed technique can be viewed as an equivalent way to refocus every single pixel using a custom refocus value, to ensure the object described by the pixel to be in focus. In other words, the proposed technique allows to generate all-in-focus images, while preserving all the advantages of the refocusing using splatting. For example, such technique is parallelizable, and prevents the occurring of image artifacts as no demosaicing is needed. At last, such technique enables the controlling of the rendering size.

Therefore, such technique is somehow similar to the Raytrix refocusing method, with the difference that the proposed technique does not need any prior information about the camera optics (internal parameters), and the pixel depth information comes for a G-map, allowing a different pixel search in the raw light field.

Nonetheless, the proposed technique allows a lot more than just providing all-in-focus images. In fact, knowing the scene structure, one can arbitrary define a set of focus planes that will integrate more angles that the focusing region. Doing so, it can be possible to do a refocusing with the difference that focus profiles that are not physically possible with a conventional optical system or the refocusing algorithms in the state of the art can be created.

The proposed technique relies on the observation that, in the context of light field camera a blur is fundamentally nothing more than mixing rays having a different input angle.

As explained in Figure 4, more ray-pixel around the raw-light field coordinate (*xₜ,yₜ*) can be used to artificially create blur. The integration area, can be described by any, radial or not, weighting or masking window function.

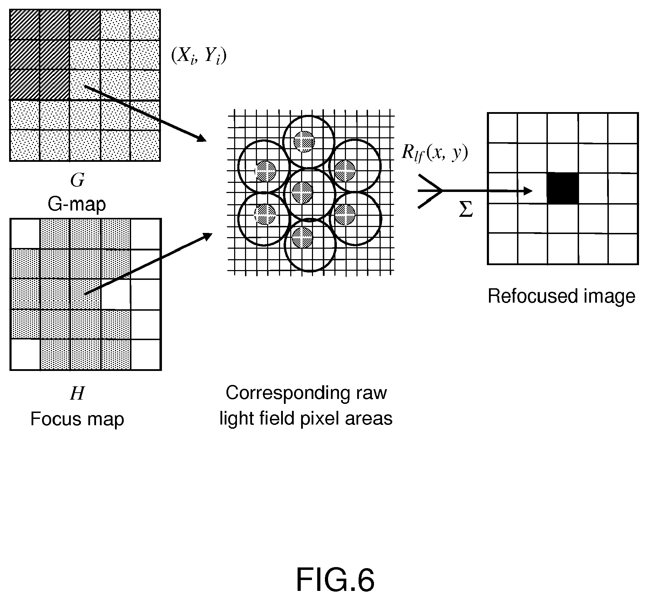

Figure 6 presents the determining of the value of a given pixel in a refocused image according to another embodiment of the disclosure.

In such embodiment, it is proposed to averaging pixels values in a circular neighborhood of a pixel coordinates *(xₜ, yₜ).* A focus map noted *H,* defining an integrating radius around each pixel(*xₜ*,*yₜ*) in the 4D raw light field data is used in order to do the refocusing process. The pixel intensity value of *(k, l)* is obtained as follows: $I \left(k, l\right) = \frac{1}{C \left(k, l\right)} {\sum }_{\left(x, y\right) , t} \left({{K}^{′ \left(t\right)}}_{x , y , k , l}\times {{K}^{\left(t\right)}}_{x , y}\times {I}_{raw}\left(( floor \left(x\right) , floor \left(y\right)\right)\right) )$ with ${{K}^{′ \left(t\right)}}_{x , y , k , l} = { \begin{matrix}1 if \sqrt{{\left(x-{x}_{t}\right)}^{2} + {\left(y-{y}_{t}\right)}^{2}} < H \left(k, l\right) \\ 0 otherwise\end{matrix}$

The focus map *H* is created using any function that establishes a relationship between an integration radius (in pixels) and the G-map.

For instance, if the desired refocusing is a conventional single focus plane refocusing, we express *H* as: $H \left(X, Y\right) = a \times \left|G\left(X, Y\right)-{g}_{f}\right|$

More interestingly, if we want to generate a blur according to two focal plane described by *g*_{*f*₁} and *g_{f₂},* we define *H* as: $H \left(X, Y\right) = a \times min \left(\left|G\left(X, Y\right)-{g}_{{f}_{1}}\right|, \left|G\left(X, Y\right)-{g}_{{f}_{2}}\right|\right)$

From now, the focus possibilities are limited the ability to express it as a focus map depending of *G*. Moreover, this technique avoids dealing with the edge overlapping issue we had with splatting.

It should be noted that using several integration kernel allow performing serval effects, and using an arbitrary shaped kernel can generate different effect. For example, we can suggest to use Line kernels to simulate a moving blur, only in out of focus areas; or to use kernel that can process color channel differently depending of the focus; or to use hexagonal kernel to simulate an conventional aperture, etc.

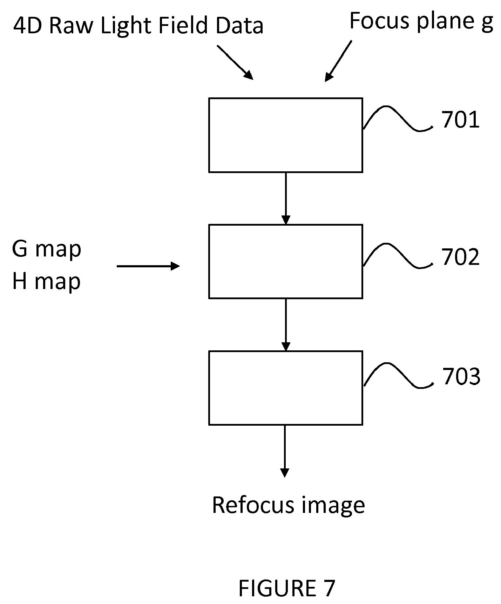

Figure 7 presents a flow diagram of a method for obtaining a refocused image according to an embodiment of the disclosure, executed by an electronic device.

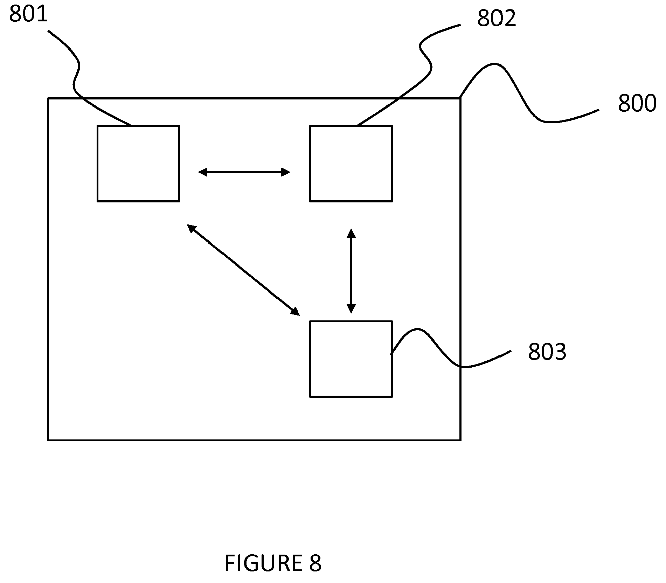

In a step referenced 701, the electronic device (as the one depicted in Figure 8 for example) obtains a 4D raw light field data (being a set of micro-lens images, and with additional information such as the coordinates of the micro-lens images centers, and the focal of the micro-lens associated with the micro-lens images, etc.). In an embodiment, the user provides an expected focus plane *g*. For example, the user inputs (via a user interface, or other input means such as a keyboard, voice detector, etc.) a value corresponding to an expected focus plane *g*. Indeed, the user wants to see a 2D image in which the focus is done at the focus plane *g*. In a variant, the user also inputs a value *s* related to the image size of the expected refocused image. In a variant, such value is fixed, and obtains from the reading of a memory unit.

Then, in a step referenced 702, the electronic device obtains a lookup table being a representation of the function *G(X,Y)* previously mentioned. In another embodiment, an analytic formulae can be obtained instead of a lookup table. In another embodiment, the electronic device further obtains a representation of the function *H*(*X,Y*) previously mentioned.

In a step referenced 703, the electronic device performs some or all the processing operations described in Figure 3 to 6. Tus, the electronic device can output a refocused image that can be displayed by the electronic device, or another electronic device.

Figure 8 presents an example of device that can be used to perform one or several steps of methods disclosed in the present document.

Such device referenced 800 comprises a computing unit (for example a CPU, for *"Central Processing Unit"*), referenced 801, and one or more memory units (for example a RAM (for *"Random Access Memory"*) block in which intermediate results can be stored temporarily during the execution of instructions a computer program, or a ROM block in which, among other things, computer programs are stored, or an EEPROM ("*Electrically-Erasable Programmable Read-Only Memory*") block, or a flash block) referenced 802. Computer programs are made of instructions that can be executed by the computing unit. Such device 800 can also comprise a dedicated unit, referenced 803, constituting an input-output interface to allow the device 800 to communicate with other devices. In particular, this dedicated unit 803 can be connected with an antenna (in order to perform communication without contacts), or with serial ports (to carry communications "contact"). It should be noted that the arrows in Figure 8 signify that the linked unit can exchange data through buses for example together.

In an alternative embodiment, some or all of the steps of the method previously described, can be implemented in hardware in a programmable FPGA (*"Field Programmable Gate Array"*) component or ASIC ("*Application-Specific Integrated Circuit*") component.

In an alternative embodiment, some or all of the steps of the method previously described, can be executed on an electronic device comprising memory units and processing units as the one disclosed in the Figure 8.

In one embodiment of the disclosure, the electronic device depicted in Figure 8 can be comprised in a camera device that is configure to capture images (i.e. a sampling of a light field). These images are stored on one or more memory units. Hence, these images can be viewed as bit stream data (i.e. a sequence of bits). Obviously, a bit stream can also be converted on byte stream and vice versa.

## Claims

1. A method for obtaining a refocused image from 4D raw light field data for a given focus plane value *g*, the method being executed by an electronic device, and being **characterized in that** it comprises determining at least one pixel value of said refocused image at coordinates $\left(k, l\right) ∈ {N}^{2} ,$*(k, l)* said determining comprising:
- obtaining a list of pixel coordinates comprised in said 4D raw light field data, each of said pixel coordinates being comprised in a micro-lens image associated with a micro-lens, each of said pixel coordinates belonging to a different micro-lens image, and each of said pixel coordinates being determined as a function of a depth map and a center of the micro-lens image it belongs to;
- weighting and summing pixels values comprised in said 4D raw light field data, said pixel values being obtained based on said list of pixel coordinates.

2. The method for obtaining according to claim 1, wherein a pixel coordinate(*xᵢ*,*yᵢ*).
comprised in said list, is defined as a function of $( \frac{\frac{k}{s} - {c}_{{xμlens}_{i}}}{G \left(k, l\right)} + {c}_{x {μlens}_{i}} , \frac{\frac{l}{s} - {c}_{y {μlens}_{i}}}{G \left(k, l\right)} +$
${c}_{y {μlens}_{i}} ) ,$ where *s* is a ratio size between the 4D raw light field data and the refocused image, (c*_{xᵢµlens}, c_{yᵢµlens}*) correspond to the micro-lens image center coordinates associated with the micro-lens *i,* and the function *G(X,Y),* being said depth map, is equal to the focus value *g* when the pixel having coordinates (*X,Y*) is in focus in said refocused image.

3. The method for obtaining according to claim 2, wherein $\left({x}_{i}, {y}_{i}\right) = ( floor ( \frac{\frac{k}{s} - {c}_{{xμlens}_{i}}}{G \left(k, l\right)} +$ ${c}_{{xμlens}_{i}} ) , floor \left(\frac{\frac{l}{s} - {c}_{y {μlens}_{i}}}{G \left(k, l\right)}+{c}_{y {μlens}_{i}}\right) ) ,$ where floor (.) is the floor function or the greatest integer function.

4. The method for obtaining according to claim 2, wherein $\left({x}_{i}, {y}_{i}\right) = ( ceil ( \frac{\frac{k}{s} - {c}_{{xμlens}_{i}}}{G \left(k, l\right)} +$ ${c}_{{xμlens}_{i}} ) , ceil \left(\frac{\frac{l}{s} - {c}_{y {μlens}_{i}}}{G \left(k, l\right)}+{c}_{y {μlens}_{i}}\right) ) ,$ where ceil (.) is the ceiling function.

5. The method for obtaining according to claim 2, wherein $\left({x}_{i}, {y}_{i}\right) = ( ceil ( \frac{\frac{k}{s} - {c}_{{xμlens}_{i}}}{G \left(k, l\right)} +$ ${c}_{{xμlens}_{i}} ) , floor \left(\frac{\frac{l}{s} - {c}_{y {μlens}_{i}}}{G \left(k, l\right)}+{c}_{y {μlens}_{i}}\right) ) ,$ where ceil (.) is the ceiling function and floor (.) is the floor function or the greatest integer function.

6. The method for obtaining according to claim 2, wherein $\left({x}_{i}, {y}_{i}\right) =$ $\left(floor\left(\frac{\frac{k}{s} - {c}_{{xμlens}_{i}}}{G \left(k, l\right)}+{c}_{{xμlens}_{i}}\right),ceil\left(\frac{\frac{l}{s} - {c}_{y {μlens}_{i}}}{G \left(k, l\right)}+{c}_{y {μlens}_{i}}\right)\right) ,$ where ceil (.) is the ceiling function, and floor (.) is the floor function or the greatest integer function.

7. The method for obtaining according to any claims 1 to 6, wherein said obtaining a list of pixel coordinates further comprises discarding at least one pixel coordinates according to a micro-lens image belonging distance criteria.

8. The method for obtaining according to claim 7, wherein said discarding of said at least one pixel coordinates occurs when an Euclidian distance between position of said at least one pixel coordinates, and position of the center of micro-lens images being processed is larger than the radius of said micro-lens images being processed.

9. The method for obtaining according any claims 1 to 8, wherein said obtaining a list of pixel coordinates further comprises obtaining a list of micro-lens images, each of said micro-lens images being virtually intersected by a circle of center coordinates $( k / s , l /$ $s ) ∈ {N}^{2} ,$ where *s* is a ratio size between the 4D raw light field data and the refocused image, and of radius *n*, said list of micro-lens images being used to determine said list of pixel coordinates.

10. The method for obtaining according any claims 1 to 9, wherein said weighting and summing pixels values further comprises determining for each pixel coordinates of said list, a set of neighboring pixel coordinates belonging to the same micro-lens image than the processed pixel coordinate, the union of these sets defining pixels coordinates whom values have to be weighted and then summed.

11. The method for obtaining according to claim 10, wherein said neighboring is related to the belonging of a circle centered on a pixel coordinate of said list, and with a radius equal to R.

12. The method for obtaining according to claim 11, wherein the radius R is defined as a function of the given focus plane value *g* and the focal length of the micro-lens associated with the micro-lens image where the pixel coordinate of said list belongs to.

13. The method for obtaining according to claim 11, wherein the value of the radius R is defined based on a depth map and the given focus plane value *g*.

14. The method for obtaining according to any claims 1 to 13, wherein said weighting comprises decreasing the contribution of pixels values as a function of a distance between coordinates of said pixels values and said list of pixel coordinates.

15. A computer-readable and non-transient storage medium storing a computer program comprising a set of computer-executable instructions to implement a method for processing 4D raw light field data when the instructions are executed by a computer, wherein the instructions comprise instructions, which when executed, configure the computer to perform the method of claims 1 to 14.

16. An electronic device for obtaining a refocused image from 4D raw light field data for a given focus plane value *g*, **characterized in that** it comprises a module configured to determine at least one pixel value of said refocused image at coordinates $\left(k, l\right) ∈ {N}^{2} ,$ comprising:
- a module configured to obtain a list of pixel coordinates comprised in said 4D raw light field data, each of said pixel coordinates being comprised in a micro-lens image associated with a micro- lens, each of said pixel coordinates belonging to a different micro-lens image, and each of said pixel coordinates being determined as a function of a depth map and a center of the micro-lens image it belongs to;
- a module configured to weight and sum pixels values comprised in said 4D raw light field data, said pixel values being obtained based on said list of pixel coordinates.
